(19) Europäisches Patentamt
European Patent Office
Office européen des brevets

(11) **EP 3 382 342 A1**

(12) **EUROPEAN PATENT APPLICATION**

(43) Date of publication:
**03.10.2018 Bulletin 2018/40**

(51) Int Cl.:
*G01C 21/26* (2006.01)    *B60W 40/09* (2012.01)
*G01B 21/30* (2006.01)

(21) Application number: **17163475.1**

(22) Date of filing: **29.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Bayerische Motoren Werke Aktiengesellschaft**
**80809 München (DE)**

(72) Inventors:
• **Künzel, Christian**
  **85748 Garching bei München (DE)**
• **Manas Pont, Eduardo**
  **80539 Muenchen (DE)**

(54) **DEVICE, VEHICLE, SYSTEM AND METHOD FOR MONITORING ACCELERATION**

(57)    An acceleration detecting device is provided, comprising a sensor configured to detect acceleration values, a processing unit configured to process the acceleration values, and a communication unit configured to send data based on the acceleration values to a remote processing system.

Fig. 1

Printed by Jouve, 75001 PARIS (FR)

**Description**

The invention relates to a device, a system and a method for monitoring accelerations. In particular, acceleration values are determined by an acceleration detecting device and data based on the determined acceleration values is sent to a monitoring system. Preferably, the monitoring system send out processed, analyzed, accumulated and/or stored data. The stored data is particularly received and processed by a route planning device. The acceleration detecting device and/or the route planning device can each be located in a vehicle, preferably a vehicle driving at least partially autonomous. The acceleration detecting device and/or the route planning device can be arranged in a one or more vehicles. Typically, plural vehicles are provided with the acceleration detecting device and/or the route planning device.

More specifically, the invention aims at improving comfort in vehicles, especially for at least partially autonomous driving like Highly Automated Driving (HAD), and reducing accelerations, e.g. vertical and/or horizontal accelerations. These accelerations in most cases correlate with a surface a vehicle is driving on. Based on the assumption that a reduction of in particular vertical acceleration inputs result in increased passenger comfort, the invention's goal is to reduce the effect of road surface features on vehicle users. A method to identify, process and distribute data resulting from detected accelerations, which is also referred to as road quality data, is presented using a vehicle exchanging information with a processing system (e.g. a server, processing cluster or cloud system). Automated notice can be activated and signals can be issued to warn about, indicate, avoid or counteract the accelerations.

There are known methods that record and interpret the vehicle environment, most of which focus on passenger safety or road maintenance and employ on-board monitoring devices, e.g. A. Mednis et al. Real time pothole detection using android smartphones with accelerometers. In Distributed Computing in Sensor Systems and Workshops, 2011 International Conference on, pages 1-6. IEEE, 2011. However, Smartphones require reorientation algorithms given their random orientation in vehicles. Also false accelerations will be measured if users operate a smartphone used for the pothole detection and measuring requires the active engagement of users (e.g. running the necessary applications). Finally, not all drivers own a smartphone.

The development of at least partially autonomous or self-driving vehicles has accelerated the shift from an active, full-time driver responsible for driving the vehicle towards operation of the vehicle by automated systems at least partially performing the driving task. During performing the driving task, no human action is needed.

When the driver is no longer in charge of driving and thus relieved of watching the environment, his propensity to motion sickness and other negative symptoms will increase. This may be accentuated in particularly by vertical accelerations correlating with the road surface quality (e.g. bumpy roads, and singularities like potholes or speed bumps). Based on the assumption that a reduction of vertical vibration inputs will enhance passenger comfort, processing and monitoring a road surface, which is reflected by the accelerations, improves comfort.

The invention hence presents a solution as outlined in the independent claims. Further embodiments of the invention are addressed with the dependent claims.

In one aspect, an acceleration detecting device is provided, comprising a sensor configured to detect acceleration values, a processing unit configured to process the acceleration values, and a communication unit configured to send data based on the acceleration values to a remote monitoring system. The communication unit can be used for wireless communication over communication networks, e.g. UMTS, LTE, WIFI, Zigbee, Bluetooth, ...

The acceleration detecting device can further comprise a positioning unit, configured to detect a position of the acceleration detecting device, in particular a geographic position. The positioning unit can be a GPS, Galileo, GLONASS and/or Beidou positioning unit and can be configured to receive respective positioning signals.

The acceleration detecting device can further comprise a clock unit configured to output time information in relation to the detected acceleration values. In particular, the clock unit outputs a time signal, indicating when an acceleration was detected. Based on the time signal, a peak-to-peak period between two local acceleration maxima or two local acceleration minima can be determined.

The data based on the acceleration values can contain at least the position, e.g. a set of coordinates, detected by the positioning unit for detected acceleration values. In particular, the data based on the acceleration values can only contain the position. The detected acceleration values can be compared to at least one threshold value. Information on the acceleration values is comprised in the data based on the acceleration values, in case the at least one threshold value is crossed, e.g. exceeded. Preferably, the data based on the acceleration values is only submitted, when the at least one threshold value is crossed.

The processing unit can perform a filtering on the data based on the acceleration values to the monitoring system. The processing unit can especially select, which data is send to the monitoring system, e.g. based on a comparison with the at least one threshold value and can send the filtered data to the monitoring system. Also more complex filters can be applied. A preprocessing, accumulation, clustering, grouping and/or selection can also be performed by the processing unit. A set of parameters can be preset to define the processing performed by the processing unit. At least one parameter of the set of parameters can be adjustable by a user.

The sensor can configured to detect vertical and/or horizontal acceleration values. The sensor can be configured detect acceleration values in all spatial directions and/or sub-combinations thereof. The sensor can detect the acceleration values on basis of excitation caused by movements of the sensor.

The acceleration values can be indicative of surface conditions.

In another aspect, a route planning device is provided, comprising a processing unit configured to determine at least one route from a start to a target destination, a communication unit configured to query a remote monitoring system for data based on acceleration values for the determined route and to receive queried data, wherein the processing unit is configured to process the received data, and to issue a signal based on the received and/or processed data. The processing unit can also query the remote monitoring system based on a defined geographical area, e.g. as displayed on a navigation system. The queried data can be displayed on a display unit. Depending on the content of the queried data, different portions of the geographical area, e.g. roadways, can be displayed differently, e.g. in different colors. The communication unit can be used for wireless communication over communication networks, e.g. UMTS, LTE, WIFI, Zigbee, Bluetooth, ...

The queried data can be indicative of an expected comfort level of at least one determined route from the start to the target destination, or a roadway. The processing unit can output the signal to a display unit to indicate a comfort level of the at least a part of the at least one route.

At least one parameter contained in the queried data can be compared to at least one threshold value, and, in case a value of the at least one parameter crosses the threshold, the signal can be issued as a notice, e.g. an alert, preferably indicative of a hazardous situation. The notice can be issued visually, haptically and/or acoustically, e.g. displayed by a display unit, output by a speaker and/or output as haptic feedback, e.g. in form vibrations. Also, with the signal, the processing unit can control at least one actuator, e.g. to reduce an influence of expected road conditions and the impact of accelerations expected based on the queried data.

At least one parameter contained in the queried data may be compared to at least one threshold value. In case a value of the at least one parameter crosses the threshold, at least one route can be at least partially updated, altered or newly determined. In particular, in case the queried data is indicative of specific a comfort lever, or the comfort level is below a specified comfort level, the at least one route can be changed.

The signal can be an adjustment signal issued to adjust an actuator based on at least one parameter contained in the queried data, preferably when the at least one parameter is compared to at least one threshold value and especially in case a value of the at least one parameter crosses the threshold.

The acceleration detecting device and the route planning device can also be combined into one device. The processing unit of the acceleration detecting device and the route planning device can be combined as one device, preferably with a common processing unit and/or a separate processing unit.

In another aspect, a vehicle, in particular autonomous vehicle, is provided, comprising an acceleration detecting device as described herein and/or a route planning device as described herein. The vehicle can be of any manual or automatic driving level. The sensor of the route planning device can be a sensor arranged at a seat and/or connected to a chassis and/or body of the vehicle. The processing unit can be configured to issue the signal to adjust an actuator of the vehicle, to output a notice, change the at least one route at least partially and/or to change a driving parameter of the vehicle. In particular, the processing unit can control driving parameters and/or actors of the vehicle.

In yet another aspect, a monitoring system is provided, comprising a processing system configured to process, analyze, accumulate and/or store received data based on acceleration values, and a system communication unit configured to send out processed, analyzed, accumulated and/or stored data upon receipt of a query request, and a route planning device as described herein, preferably arranged in a vehicle. The processing system can be a cluster, cloud and/or server system. It can be configured with multiple processors and or storage means, e.g. hard disks, flash drives and be a computer system configured to act as a backend.

The monitoring system can comprise an acceleration detecting as described herein, preferably arranged in a vehicle. The system communication unit can receive data based on acceleration values.

In another aspect, a monitoring method is provided, comprising steps of detecting acceleration values, processing the acceleration values, and sending data based on the acceleration values to a monitoring system by an acceleration detecting device, processing, analyzing, accumulating and/or storing received data based on acceleration values, and sending out processed, analyzed, accumulated and/or stored data by the monitoring system.

The Monitoring method can comprise the steps of determining at least one route from a start to a target destination, querying the monitoring system for data based on acceleration values for the determined route and receiving the queried data, processing the received data, and issuing a signal based on the received and/or processed data.

The Invention is now also explained in more detail with reference to the figures:

Figs. 1a to 1c    provide a schematic overview of the invention,

Fig. 2    shows a schematic view of a backend configuration

Fig. 3             illustrates possible processing paths,

Fig. 4             illustrates a structure of a cluster-based response decision,

Fig. 5             illustrates a structure of a cluster-based response decision method,

Fig. 6             illustrates some RQIs, and

Fig. 7             shows a schematic of the method.

While in principle all accelerations can be handled by the presented approach, a methodology is presented that maximizes especially vertical dynamics comfort by monitoring vertical accelerations. This can be achieved through a plurality of vehicles equipped with the acceleration detecting device and/or the route planning device exchanging information with a processing system. The aggregated, off-board analysis of the information gathered by different devices of the vehicles stored at the processing system, provides comfort-relevant and periodically updated information on the road quality.

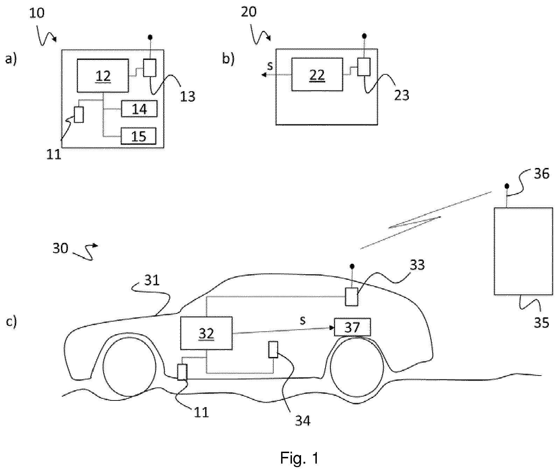

Figs. 1a-c show the basic components that are used by the invention. Fig. 1 a shows the acceleration detecting device 10. The acceleration detecting device 10 is shown with a sensor configured to detect acceleration values that ultimately caused, for example by vibrations introduced to the acceleration detecting device, for example, when the acceleration detecting device is moved. The output of the sensor 11 is then received and processed by processing unit 12. Processing unit 12 can especially filter the acceleration values output by the sensor 11 and also compare the acceleration values output by the sensor 11 to at least one threshold value. Moreover, the processing unit 12 can perform selection operations on the acceleration values and may accumulate or derive data based on the acceleration values. Further, a communication unit 13 is shown, used to send data based on the acceleration values, e.g. data derived from the detected acceleration values or the processing of the processing unit 12 to a remote processing system. Also, a positioning unit 14 is displayed, which is used to receive global positioning signals and determine global position of the acceleration detecting device 10 and to output coordinates relating to the position of the acceleration detecting device 10. The processing unit 12 can associate detected accelerations and acceleration values with coordinates output by the positioning unit 14. Further, a clock unit 15 is shown, which is used to output of a time signal. The time signal output by the clock unit 15 is also fed to the processing unit 12. The clock unit 15 is generally used for timekeeping. With the clock unit 15 time durations of periods and the time of measurements can be determined and recorded. The processing unit 12 can associate the time signal and more particular a time information contained therein with the detected acceleration values. Processing unit 12 can store the data it receives in the storage unit (not shown) and can send the received data and/or the data based on the acceleration values via the communication unit 13. The processing unit 12 can send the data based on the acceleration values based on a comparison of the acceleration values with at least one threshold value. In particular, in case one or more acceleration values cross one or more threshold values the processing unit 12 can decide to send or not send the data based on the acceleration values. Based on the comparison of the acceleration values with the at least one threshold value, the processing unit 12 can decide to only send subset of the data received by the processing unit 12 using the communication unit 13. For example, if a threshold value is not crossed, e.g. exceeded, the processing unit 12 can decide to only send coordinates obtained by the positioning unit 15.

Fig. 1 b now shows a route planning device 20. The exemplary shown route planning device 20 also shows a processing unit 22, which can calculate a road from a start to a target destination. The start and/or target destination can be user defined. The processing unit 22 can use the communication unit 23 to query a remote processing system for data based and/or derived from acceleration values. The processing unit 22 queries the remote processing system for at least route determined by the processing unit. The communication unit is also used to receive queried data, which is data sent by the remote processing system as answer to the query issued by the processing unit 22 to the remote processing system. The processing unit 22 then processes the received data and issues a signal s based on the received and/or processed data. The signal s can especially be a display signal or an adjustment signal that is used to display, change, or adjust parameter, for example in a vehicle. The queried data relates to a comfort level of the at least one determined route. The comfort level can be displayed on the display (not shown). The signal s can be issued by the processing unit 22 especially when a threshold value is crossed after a comparison of a parameter contained in the queried data with the threshold value. The signal s can be issued as a notice, for example an alert which can be indicative of a hazardous situation. A hazardous situation can for example be the occurrence of a pot hole or a situation, in which the comfort level is decreased below a predefined level due to accelerations that would be introduced to the route planning device when it would be moved on the at least one determined route. Based on the received or processed data, the at least one determined route can at least partially be updated, altered, changed or newly determined. The signal s can also be indirectly or directly issued to an actuator to adjust a setting of the actuator.

The acceleration detecting device 10 and the road planning device 20 can also be combined. In this case, only one communication unit 13, 23 is needed by the combined device. Moreover, while the route planning device 20 can also be equipped with a storage unit (not shown), the combined device can share the common storage unit for storing data. Additionally, also the processing units 12, 22 can be combined into one processing unit.

Fig. 1c shows a monitoring system 30 with at least one vehicle 31 with a combined device 32 resulting from a combination of the acceleration detecting device 10 and the route planning device 20, in which redundant units are combined. Of course, the vehicle 31 can also be equipped with an acceleration detecting devised 10 separated from a route planning device 20. Moreover, the vehicle 31 can also be equipped with any of the acceleration detecting device 10 or the route planning device 20. Vehicle 31 can be equipped with an additional sensor 34, which, for example, can be arranged in a passenger seat of the vehicle 31, while sensor 11 can be attached to a body or chassis of the vehicle 31. Of course, only one sensor can be used in vehicle 31 while also more than one or two sensors can be used. The communication unit 33 is used to communicate with the remote processing system 35. The communication unit 33 basically corresponds to communication unit 13 and/or 23. The remote processing system 35 is also equipped with a communication unit 36. An actuator 37 is arranged in the vehicle 31. The combined unit 32 controls the actuator through the signal s. Therefore, the combined unit 32 can adjust the setting of the actuator 37. Of course, more than one actuator can be controlled by the combined unit 32 or, respectively by the route planning device 20. An example for an actuator 37 is a display unit, an acoustic output device, or, a vehicle damper.

When a vehicle 31 plans a route with the rout planning unit 20, 32 that has been monitored before, the system can use the available data to activate automated signals to warn about, avoid or counteract the appearance of discomfort prompted by the accelerations. Possible signals could trigger the determination or planning of alternative routes with better surface conditions, automatic speed and drivetrain adaptions by controlling respective actuators, e.g. actuator 37, and/or issuing signals or notifications to a user of the vehicle 31. Since the vehicle 31 anticipates road conditions and acceleration influences expected on the planned road, the vehicle 31 has a priori knowledge of the road to dive. This can also be seen as prediction of adverse conditions to be expected and the comfort maximizing vehicle 31 responses will only take place as long as they are compatible with user and third-party safety.

Important to the invention is an end-to-end approach to process road surface quality data, i.e. data based on the acceleration values, for comfort maximization, the development of adequate and automatic vehicle responses to minimize the effect of vertical accelerations. Road quality monitoring includes motion control authorization, i.e. automated dynamic responses without the intervention of a human driver, the hierarchical integration and compatibility with other systems, the focus on comfort, e.g. vertical comfort, i.e. the minimization of events prompting undesired accelerations affecting the passengers, the consideration of any type of road surface anomaly, including benevolent events such as rail crossings or speed bumps, the use of the aggregated and organized information, especially to activate an appropriate automatic response for a specific event.

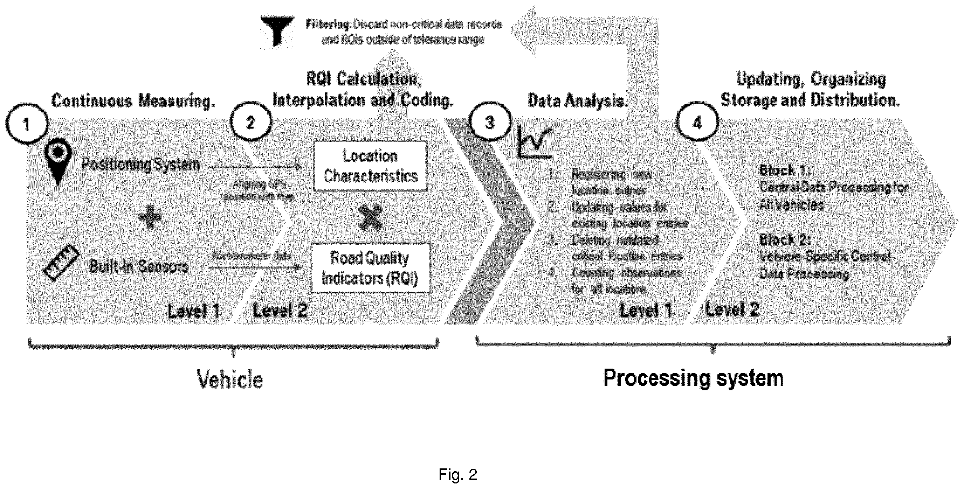

The monitoring system 30 is preferably composed of two entities, at least one vehicle 31 and a processing system 35. Both entities communicate bi-directionally, i.e. the vehicle 31 receives and/or sends data from/to the processing system 35, e.g. a central server. The method includes on-board (vehicle) and off-board (back end) processing steps, where the backend processing is performed by processing system 35. The processing can be divided into four parts as illustrated in Fig. 2: a continuous or periodic measuring A, a Road Quality Indicator (RQI) calculation which can be interpolated B, a data analysis C and an updating, organizing, storage and/or distribution process D. Steps A and B are also named vehicle levels 1 and 2, preferably performed onboard the vehicle 31, e.g. by acceleration detection device 10, route planning device 20 and or combined device 32, 11, 33, 34. Steps C and D correspond to Back End Levels (BEL) 1 and 2, performed by the processing system 35.

In respect to the continuous measuring A, accelerations indicate road surface quality, and built-in sensors 11, 34 such as accelerometers can be used as monitoring devices. Since one aim is to increase passenger comfort, it is important to measure accelerations and determine acceleration values therefrom as close to the passengers as possible. A preferred position would be underneath or within vehicle seats (e.g. sensor 34), which have the least relative motion with respect to passengers. A sensor 11, 34 can be configured with a measurement frequency of 100-400Hz. For a speed of e.g. 130km/h and 400Hz, the monitoring resolution can be determined as:

$$\Delta x = \frac{130km}{h} \cdot \frac{1h}{3600s} \cdot \frac{1000m}{1km} \cdot \frac{1s}{400} \simeq 0,09m = 9cm$$

Anomalies are usually greater than 9cm, and that they are perceived twice (front and rear axles), the probability of false negatives can be neglected. This level of accuracy would be able to monitor most potholes and bumps at highway speeds. Given the fact that a singularity will generally affect a front and rear axle (and will be perceived twice in the vehicle interior), singularities (bumps, potholes) have a length greater than 9 cm, and with the hypothesis that the presence of singularities in a road tends to be inversely proportional to its speed limit, the probability of false negatives is not significant, even with defective sensors - supposing that drivers do not avoid the singularity by driving around it.

The positioning unit 14 is necessary to geographically locate events monitored by sensors 11, 34. The positioning unit 14, e.g. a GPS, GALILEO, GLONASS receiver, especially has an update frequency of 1-5Hz and provide additional information such as time of recording ($t$), vehicle velocity ($v$) and heading ($h$) aside from delivering vehicle position. Given the tolerances of the positioning system, the measured position may not match a position on the vehicle cartography software and locate the vehicle 31 outside of its actual track. It is therefore necessary to align coordinates from the positioning unit and map coordinates. Pinpointing the exact position of an anomaly within a road, including affected lane(s) or position within lane, can be achieved by high-precision maps. In this case, the positioning unit can be complemented by camera-based measurements of the distances from the vehicle 31 to the outer edges of the road.

Road Quality Indicator (RQI) calculation and/or Interpolation can be performed by the processing unit 12 or a processing unit of the combined unit 32 and is based on acceleration data. However, accelerations values are not sufficient to recognize a comfort-critical location, while they provide raw data for the calculation of comfort-relevant Road Quality Indicators (RQIs). RQIs are quantitative acceleration based parameters that determine whether a location is critical (comfort-compromising) or not by comparing it to threshold values obtained from empirical comfort studies. A location will be considered critical as soon as one RQI surpasses its associated threshold. The present method will exemplarily use longitudinal and lateral comfort RQIs.

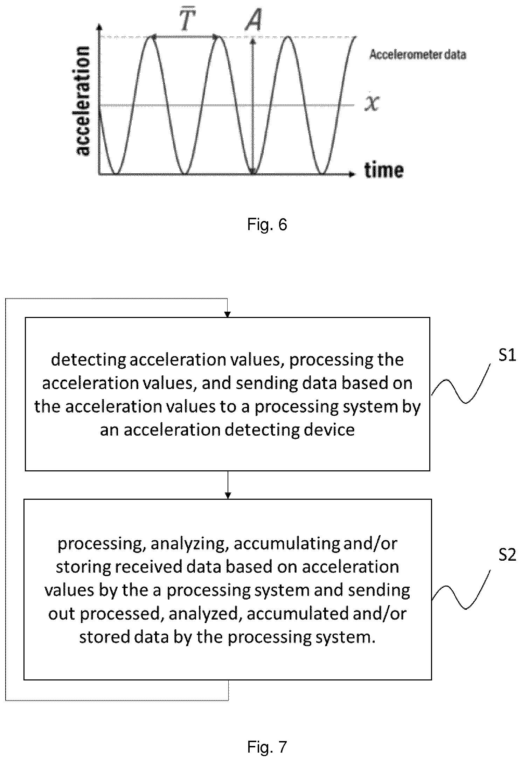

From a series of raw vertical acceleration measurements throughout time, the following RQIs are regarded: an average acceleration value $x$, an amplitude A of a function between a local minimum acceleration $a_{min}$ and a local maximum acceleration $a_{max}$ ($A=a_{max} - a_{min}$), and the period of the function $T$, which defines an average peak-to-peak period between the times of two local maximums or two local minimums (e.g. $t_{max2} - t_{max1}$, or $t_{min2} - t_{min1}$), while $T_{max}$ and $T_{min}$ define a maximum and a minimum period. $T$, $T_{max}$ and $T_{min}$ correspond to the average, maximum and minimum peak-to-peak distances recorded within the location windows, respectively. Amplitude $A$ and period $T$ are also illustrated in Fig. 6.

The measurement frequency of the positioning unit is usually lower than the acceleration measurements (e.g. 1-5Hz vs. 100-400Hz). This leads to the generation of location windows with multiple acceleration measurements when pairing (interpolating) location characteristics and RQIs (see B in Fig. 2). In order to obtain the pairing, a data record $f$ with the following format is generated: $f = (j,x,A,T, T_{max}, T_{min},t,v,h,k,s)$ with $j$ being the location in (latitude; longitude) coordinates, $x, A, T, T_{max}, T_{min}$ being RQIs for location $j$, $x$ being the average acceleration value, $t$ being the recording time, considering that RQIs are a dynamic variable over time, $v$ being the vehicle speed, considering that RQIs vary depending on the instantaneous speed of the vehicle 31, and $h$ being the heading of the vehicle 31 in bidirectional roads. $K$ and $s$ are vehicle ($k$) and sensor ($s$) identification codes. Data records resulting from data interpolation are filtered by the processing unit 12 or a processing unit of the combined unit 32: if at least one of the RQIs in a data record $f$ surpasses an associated threshold value, the corresponding location is labeled as critical and the data record $f$ is sent to the back end via mobile network. Otherwise, if all RQIs are within their thresholds (non-critical location), the only value delivered to the back end are the location coordinates $j$. Additional or alternative RQIs can be added if needed.

As depicted in Fig. 2, the back end at the processing system 35 can be divided into two parts: Back End Level 1 (BEL1) and Back End Level 2 (BEL2).

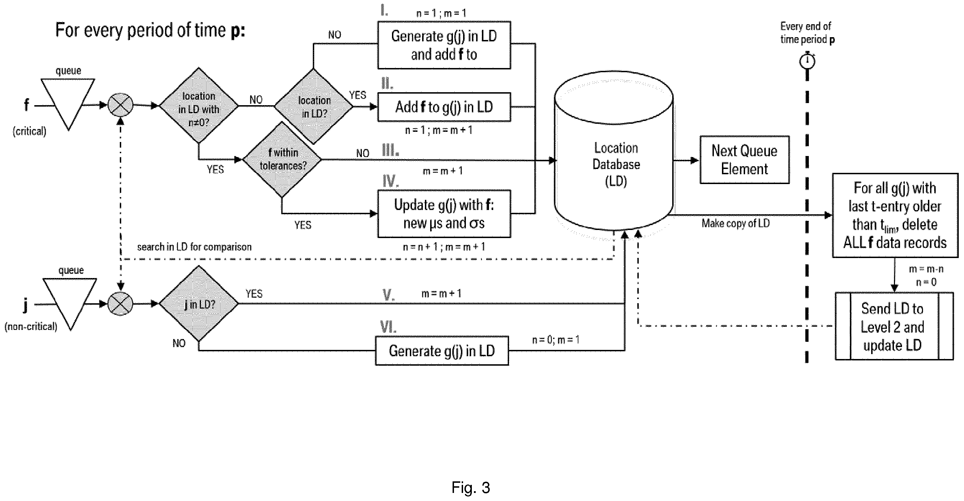

Fig. 3. Illustrates a possible structure of BEL1. Fig. 3 shows that the inputs for BEL1 correspond to the outputs of the filtering algorithm B: data records $f$ for critical locations, and location coordinates $j$ for non-critical locations. With them, BEL1 carries out four main operations: registering new location entries, updating values for existing location entries, deleting outdated critical location entries, and/or counting how often a location is monitored. The BEL1 creates and maintains a location database LD. The location database LD stores all information on all known locations in individual, location-specific entries $g(j)$. A location is known when it has been monitored by a vehicle 31, and may or may not be critical. In order to distinguish between critical and non-critical, all locations in the location database LD are stored with at least one counter: a number of critical observations $n$ at the location and/or a total number of observations $m$. Unknown locations are not included in the location database LD.

For every known non-critical location the location database LD can contain a counter with the number $n = 0$ (critical observations equal to zero) as well as the total number $m > 0$ of observations. For every known location labeled as critical, the location database LD can contain the at least one counter ($n > 0, m \geq n$), and a normal distribution for every RQI, with their mean values $\mu$ and standard deviations $\sigma$. The location database LD preferably also stores all individual RQI measurements of critical locations, and their associated $v, t, k$ and s.

In Fig. 3 six possible processing paths (cases I to VI) are exemplarily shown for BEL1. Cases I. to IV. correspond to the data analysis of critical locations, whereas Cases V and VI process locations where no anomalies have been monitored. The inputs can be processed in a first-in-first-out queue, i.e. chronologically upon reception in the processing system 35. The inputs can be compared to available location database LD information in order to choose the appropriate case.

Case I corresponds to a scenario where an anomaly is detected in a location $j$ that has never been monitored before. In other words, the first time a monitoring vehicle records information on a location, it obtains critical data for that location. In this case, the algorithm generates a new location database LD entry, $g(j)$, where it adds the information contained in the vector *f* received. It initializes the counters *n* = 1 and *m* = 1.

In Case II, a known location that is stored as non-critical is labeled as critical for the first time. The algorithm is in charge of adding *f* to the existing LD entry g(*j*), labeling the location as critical with *n* = 1 and increasing the *m* counter by 1.

Case III discards all incoming *f* that deliver data inconsistent with the stored RQI distributions, i.e. outside a confidence interval of $\mu \pm \alpha\sigma$, wherein $\mu$ is a mean value of measures, $\alpha$ is a factor to scale the confidence interval, and $\sigma$ is a standard deviation. Inconsistent values may be delivered by defective sensors or may be the result exceptional circumstances (e.g. temporary obstacles). This would increases the m-counter by 1.

Case IV processes cases within the confidence interval described above. It updates existing critical g(*j*) with the new *f*. It adds all information in the data record to the lists in g(*j*) and recalculates its statistical parameters. According to the counter logic, it increases both counters by 1.

Cases V and VI correspond to locations classified as noncritical when monitored. If a location is already in the LD, it updates the amount of total observations (Case V). If the location is not in the LD (Case VI), it generates a g(*j*) entry for *j* and initializes both counters.

At every end of a time period p, the location database LD is copied. Period p can be in the range of hours to days, preferably in the range of 12 to 48 hours and more preferably 24 hours. In the copy of location database LD, all critical occurrences g(*j*), whose last *t*-element is older than $t_{lim}$ are reset or deleted. This is done in order to delete outdated information in the location database LD. The cause of outdated information may be road works or the removal of temporary obstacles leading to the disappearance of anomalies.

After deleting outdated locations, the copy of location database LD is sent to BEL2. The copy of location database LD replaces a previous location database LD in BEL1.

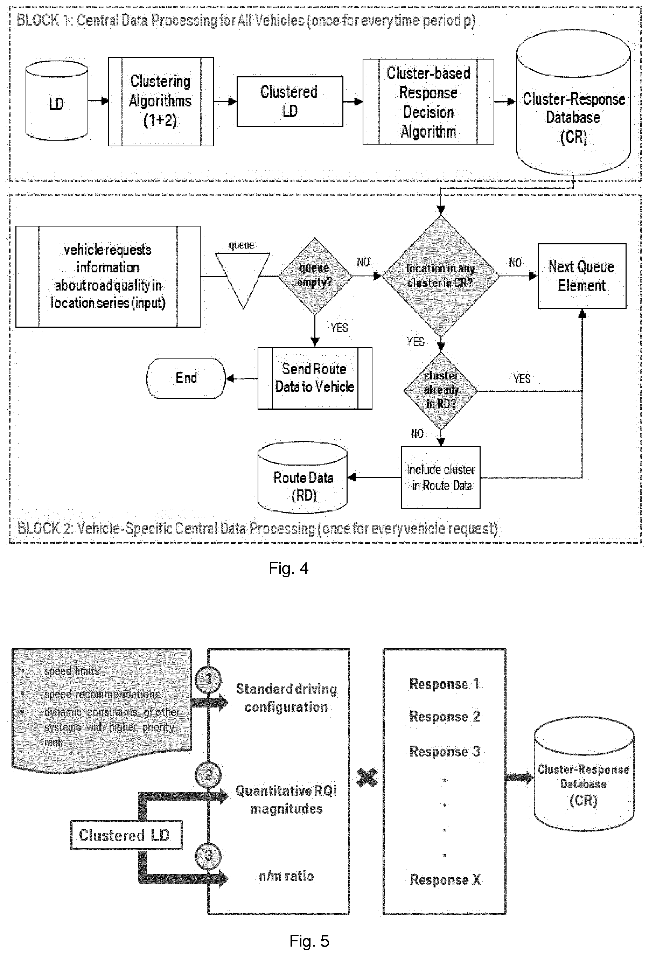

The structure of BEL2 can be divided into two main blocks: Block 1 for central data processing for all vehicles, taking place once for every time period *p*, and Block 2, the on-demand, vehicle-specific data processing taking place once for every vehicle 31 request (see Fig. 4).

Fig. 4 shows an exemplary structure of BEL2. The location database LD copy received form BEL1 is subject to a two-step clustering algorithm that bundles locations based on their position and their criticality.

In the first step, adjacent critical locations are grouped to form clusters, and so are adjacent non-critical locations. Regarding critical clusters, longer road sections with bad surface conditions form bigger clusters with more locations than small road singularities, whose clusters may count with as little as one location. The second clustering step simplifies the clusters by omitting small, noncritical clusters surrounded by larger critical segments. It also adds accuracy by adding critical clusters within other critical clusters, for exceptionally severe singularities.

Fig. 5. illustrates a structure of a cluster-based response decision method. The output of the clustering algorithms is called clustered location database LD, short Clustered LD. It includes a list of clusters that contain their corresponding locations with the same format g(*j*) as in the location database LD. The Clustered LD then enters a Cluster-based Response Decision Algorithm. This algorithm associates an appropriate automatic response to every cluster, starting from a standard driving configuration. The standard driving configuration of a given road segment is the setting that the car will adopt in non-critical situations. This configuration is based on the speed limits and recommendations for the road segment in question, as well as on the dynamic constraints from other systems with higher priority rank.

The standard driving configuration will also be a setting for unknown locations and for locations that have been labeled as critical a negligible amount of times in comparison to its total amount of observations (leading to the conclusion that the critical observations are not representative of the actual state of the road), i.e. locations with a low *n/m* ratio.

The suitable response for a critical cluster is a series of modifications with respect to the standard driving configuration, selected from a predefined array of responses that includes e.g.: speed adaptions of a certain percentage, driving mode changes and drivetrain adaptions, offering the most comfortable route, which is the one with the smallest amount, size and intensity of critical clusters, maintaining the standard driving configuration, and any combination of two or more responses listed above. The association of a cluster to an adequate response is based on three criteria: the standard driving configuration for the analyzed road segment, the RQI magnitudes of the locations in the cluster, and the n/m ratio. A successful pairing is made possible by machine learning, using comfort-oriented training sets of participants rating their comfort perception in a plurality of driving scenarios. A (machine learning) training is the performed by comparing user feedback to the acceleration patterns recorded, enabling the system to predict the optimal response to a road anomaly given an acceleration pattern. The clusters and their assigned responses are stored in the cluster-response database CR.

If a user of a vehicle 31 is willing to cover a route, the user enters the desired route in the head unit. The user for example defines a target destination to plan a rout form a current position to the target destination. However, a user can also define a start for the route planning by the rout planning device 20 or a head unit (which may include the positioning unit 14 or unit and/or a communication unit 23, such as a communication interface). The planning can take place in the vehicle 31 or the route may be transmitted to the vehicle 31 by the user, e.g. by a communication device (tablet, phone, ...). The vehicle 31 then requests information on the concerned locations to the cluster-response database CR, and, whenever available, downloads the cluster containing the location and its associated response via mobile network1 (cf. Fig. 4). The pairing cluster-response for all requested locations can be stored in a downloadable package called route data RD by the processing system 35. The route data RD can be specific for every vehicle request and may be downloaded after scanning all requested locations in the cluster-response database CR. As soon as the route data RD has been downloaded and all other systems required for completion are ready, the vehicle 31 can start the drive. The vehicle 31 will be able to activate all comfort-maximizing responses without needing further connectivity to the back end.

When a drive is finished or aborted, the route data RD can be deleted in order to avoid on-board data accumulation. A new or updated version of the route can be downloaded again if the driver wishes to resume the route or cover it one more time.

Generally acceleration-based parameters can be defined that are comfort indicators (RQIs). Thresholds can be set for every RQI to distinguish comfortable from uncomfortable phenomena. Given the subjective nature of comfort, they should represent as many users as possible and may also be adjusted by a vehicle user manually. It is therefore possible for the user to e.g. rate the comfort of a driven road and/or to give feedback, at least in a training phase, whether a situation was perceived as uncomfortable when a threshold value for a RQI was reached or exceeded.

At higher speeds, road surface events trigger higher acceleration measurements. Thus, vehicles monitoring at different speeds can lead to inaccurate or incorrect location labeling. The use of machine learning helps to assess the criticality of a road anomaly regardless of the speed. Appropriately trained machine learning algorithms recognize acceleration patterns for a variety of driving situations involving different singularities, different speeds and different vehicles, and be able to evaluate location characteristics regardless of the circumstances. Machine learning algorithms interpret the acceleration patterns and changes resulting from a road anomaly, and should ideally be based on the training sets developed in the comfort studies.

Given the variations in their construction, two different monitoring vehicles will measure different accelerations when driving over the same event at the same speed, leading again to wrong location labeling. By using training data from different source vehicles, the processing system establishes correction factors to properly interpret the incoming data delivered by different vehicles.

Depending on their architecture, vehicles may also include different monitoring hardware placed in different positions of the vehicle, again leading to measurement discrepancies. Therefore, a standard architecture where all participating vehicles comply with multiple hardware (geometric) and software (electronic) requirements neutralizes the variations, and provides a common framework for all on-board processing steps. It also increases the scalability of the approach because no hardware and software modifications will be required depending on the specific constraints of different models.

Vehicles may react to critical clusters in a way that does not improve comfort. If the system does not associate the correct response to a critical cluster and all prior steps of the methodology are operating correctly, the problem may reside in the cluster-based response decision not interpreting the trained patterns properly. If this is the case, all machine learning should undergo supervision, including the training sets to identify RQIs and their thresholds, and also feedback from the vehicle user can be analyzed and taken into account.

Using the standard driving configuration may also be hazardous when tackling severe anomalies in unknown locations. The shock provided by unexpected singularities at higher speeds may not only constitute an uncomfortable event, but also compromise passenger safety. For this type of situations the presence of a safety means is required outranking the system presented in this work and imposing a safety response over that of the system. If any system in charge of guaranteeing safety requests an action that contradicts a planned response of the methodology at any moment, the response of the methodology will be canceled in the interest of passenger or third party safety.

Preferably, the vehicle 31 operates numerous systems simultaneously. Said systems may be in charge of passenger safety, passenger comfort, providing informative digital services, etc. Vehicles will combine their own detection sensors with back end information (including maps and digital services) to identify their surroundings and extract information of relevance from them. For example, safety systems in charge of real-time environment sensing and interpretation, safety systems in charge of real-time driver sensing, informative systems (back-end-based) to alert the driver about temporary events of importance, systems in charge of environmental and economic efficiency.

Motion control can be influenced indirectly by several systems simultaneously, and in given scenarios some systems may request contradictory or incompatible action. In this case, the processing unit 22 or a processing unit of the combined device 32 can process all the commands received from systems and prioritize some based on the environment of the vehicle.

Based on the assumption that a reduction of vibration inputs result in increased passenger comfort, a participative approach to identify and minimize the effect of road anomalies on passengers by activating automated vehicle responses. The presented method is of modular structure and allows adjustments without any significant repercussion on prior or posterior steps. Changing monitoring sensors, RQIs and thresholds, algorithm structures or vehicle responses will not demand modifications at other stages. The system is designed offers good scalability opportunities. It can grow along with the gradual adoption, starting monitoring in highways regionally, and progressively expanding to other types of roads and geographic areas. The complexity of acceleration-based RQIs may also increase along with the geographic growth based on the lessons learned and the situational data accumulation in earlier implementation stages. Machine learning is incorporated and constitutes scalable subsystems: higher participation rates will refine event pattern recognition, threshold quantification and response associations, improving system performance.

Fig. 7 shows schematically basic steps of the method. In a first step S1, the acceleration values are detected, processed and data based on the acceleration values sends to processing system by an acceleration detecting device. In step S2 the received data is processed, analyzed, accumulated and/or stored by the processing system. The processed analyzed accumulated and/or stored data is then sent by the processing system, preferably to a route planning device. Of course, these steps can be performed repeatedly.

**Claims**

1. An acceleration detecting device (10), comprising
   a sensor (11) configured to detect acceleration values,
   a processing unit (12) configured to process the acceleration values, and
   a communication unit (13) configured to send data based on the acceleration values to a remote processing system (35).

2. The acceleration detecting device (10) of claim 1, further comprising a positioning unit (14), configured to detect a position of the acceleration detecting device.

3. The acceleration detecting device (10) of claim 1 or 2, further comprising a clock unit (15) configured to output time information in relation to the detected acceleration values.

4. The acceleration detecting device (10) of any one of the preceding claims, wherein the data based on the acceleration values contains at least the position, e.g. a set of coordinates, detected by the positioning unit of at detected acceleration values.

5. The acceleration detecting device (10) of any one of the preceding claims, wherein the detected acceleration values are compared to at least one threshold value and wherein information on the acceleration values is comprised in the data based on the acceleration values, in case the at least one threshold value is crossed.

6. The acceleration detecting device (10) of any one of the preceding claims, wherein the data based on the acceleration values contains only the position, in case the at least one threshold value is crossed.

7. The acceleration detecting device (10) of any one of the preceding claims, wherein the processing unit (12) performs a filtering on the data based on the acceleration values and to send the filtered data to the processing system (35).

8. The acceleration detecting device (10) of any one of the preceding claims, wherein the sensor (11) is configured to detect vertical and/or horizontal acceleration values.

9. The acceleration detecting device of any one of the preceding claims, wherein the acceleration values are indicative of surface conditions.

10. A route planning device (20), comprising
    a processing unit (22) configured to determine at least one route from a start to a target destination, and
    a communication unit (23) configured to query a remote processing system (35) for data based on acceleration values for the determined route and to receive queried data, wherein the processing unit (22) is configured to process the received data, and to issue a signal (s) based on the received and/or processed data.

11. The route planning device (20) of claim 10, wherein the queried data is indicative of an expected comfort level of the at least one determined route, and wherein the processing unit (22) outputs the signal (s) to a display unit to indicate a comfort level of at least a part of the at least one route.

12. The route planning device (20) of claim 10 or 11, wherein at least one parameter contained in the queried data is compared to at least one threshold value, and, in case a value of the at least one parameter crosses the threshold, the signal (s) is issued as a notice, e.g. an alert, preferably indicative of a hazardous situation.

**13.** The route planning device (20) of any one of the claims 10 to 12, wherein at least one parameter contained in the queried data is compared to at least one threshold value and in case a value of the at least one parameter crosses the threshold, at least one route is at least partially updated or newly determined.

**14.** The route planning device (20) of any one of the claims 10 to 13, wherein the signal is an adjustment signal issued to adjust an actuator (37) based on at least one parameter contained in the queried data, preferably when the at least one parameter is compared to at least one threshold value and in case a value of the at least one parameter crosses the threshold.

**15.** Vehicle (31), in particular autonomous vehicle, comprising an acceleration detecting device (10) according to claim 1 and/or a route planning device (20) according to claim 10.

**16.** Vehicle according to claim 15, wherein the sensor (11, 34) unit of the acceleration detecting device (10) is a sensor (11, 34) arranged at a seat and/or connected to a chassis and/or body of the vehicle.

**17.** Vehicle according to claim 15 or 16, wherein the processing unit (22) is configured to issue the signal (s) to adjust an actuator (37) of the vehicle, to output a notice, change the at least one route at least partially and/or to change a driving parameter of the vehicle.

**18.** A monitoring system (30), comprising
a processing system (35) configured to process, analyze, accumulate and/or store received data based on acceleration values,
a system communication unit (36) configured to send out processed, analyzed, accumulated and/or stored data upon receipt of a query request, and
a route planning device (20) according to claim 10, preferably arranged in a vehicle.

**19.** The monitoring system (30) according to claim 18, comprising an acceleration detecting device (10) according to claim 1, preferably arranged in a vehicle, and wherein the system communication unit (36) is configured to receive data based on acceleration values.

**20.** A monitoring method, comprising steps of
detecting acceleration values, processing the acceleration values, and sending data based on the acceleration values to a processing system (35) by an acceleration detecting device (10, 32), and
processing, analyzing, accumulating and/or storing received data based on acceleration values, by the processing system (35) and sending out processed, analyzed, accumulated and/or stored data by the processing system (35).

**21.** The Monitoring method according to claim 20, comprising the steps of determining at least one route from a start to a target destination, querying the processing system for data based on acceleration values for the determined route and receiving the queried data, processing the received data, and issuing a signal based on the received and/or processed data.

a)

10

12

13

14

15

11

b)

20

s

22

23

c)

30

31

36

32

33

s

37

35

11

34

Fig. 1

Fig. 2

Fig. 3

Fig. 4

Fig. 5

Fig. 6

detecting acceleration values, processing the acceleration values, and sending data based on the acceleration values to a processing system by an acceleration detecting device

S1

processing, analyzing, accumulating and/or storing received data based on acceleration values by the a processing system and sending out processed, analyzed, accumulated and/or stored data by the processing system.

S2

Fig. 7

Europäisches
Patentamt

European
Patent Office

Office européen
des brevets

# EUROPEAN SEARCH REPORT

Application Number

EP 17 16 3475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ARTIS MEDNIS ET AL: "Real time pothole detection using Android smartphones with accelerometers", DISTRIBUTED COMPUTING IN SENSOR SYSTEMS AND WORKSHOPS (DCOSS), 2011 INTERNATIONAL CONFERENCE ON, IEEE, 27 June 2011 (2011-06-27), pages 1-6, XP031928160, DOI: 10.1109/DCOSS.2011.5982206 ISBN: 978-1-4577-0512-0 * abstract * * paragraphs [000I], [0III], [000V] * | 1 | INV. G01C21/26 B60W40/09 G01B21/30 |
| X | US 6 484 089 B1 (MILLINGTON JEFFREY ALAN [US]) 19 November 2002 (2002-11-19) * the whole document * | 1-9,15, 16,20 | |
| X | WO 2014/062109 A1 (FORSLOF LARS [SE]) 24 April 2014 (2014-04-24) * page 5, line 23 - page 6, line 15; figure 2 * | 1 | |
| X | EP 2 863 178 A2 (BOSCH GMBH ROBERT [DE]) 22 April 2015 (2015-04-22) * abstract * * paragraphs [0024] - [0032]; figure 1 * | 1 | TECHNICAL FIELDS SEARCHED (IPC)<br><br>G01C<br>B60W<br>G01B<br>G08G<br>B60G |
| X | US 2012/053805 A1 (DANTU RAMANAMURTHY [US]) 1 March 2012 (2012-03-01) * claims 1-2 * | 1 | |
| X | US 2015/094948 A1 (LU JIANBO [US] ET AL) 2 April 2015 (2015-04-02) | 10,11, 13,15, 17-19,21 | |
| Y | * the whole document * | 12,14 | |

-/--

The present search report has been drawn up for all claims

| Place of search | Date of completion of the search | Examiner |
|---|---|---|
| The Hague | 15 March 2018 | van Doornum, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2016/125184 A2 (SOUBHAGYA SAHOO [IN]) 11 August 2016 (2016-08-11) * paragraphs [0069] - [0070]; figure 7 * ----- | 12 | |
| Y | US 2010/324781 A1 (GAGLIANO CHARLES J [US]) 23 December 2010 (2010-12-23) * abstract * ----- | 14 | |

TECHNICAL FIELDS
SEARCHED (IPC)

The present search report has been drawn up for all claims

| Place of search | Date of completion of the search | Examiner |
|---|---|---|
| The Hague | 15 March 2018 | van Doornum, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 17 16 3475

The Search Division considers that the present European patent application does not comply with the requirements of unity of invention and relates to several inventions or groups of inventions, namely:

1. claims: 1-9, 16, 20(completely); 15(partially)

   An acceleration detection device, optionally built-in into a vehicle or a monitoring system, and capable of detecting acceleration data and transmitting this data to a remote processing system.
   ---

2. claims: 10-14, 17-19, 21(completely); 15(partially)

   A route planning device, optionally built-in into a vehicle or a monitoring system, and capable of querying a remote processing system for acceleration data relating to certain routes.
   ---

## ANNEX TO THE EUROPEAN SEARCH REPORT
## ON EUROPEAN PATENT APPLICATION NO.

EP 17 16 3475

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2018

| Patent document cited in search report | | Publication date | Patent family member(s) | | Publication date |
|---|---|---|---|---|---|
| US 6484089 | B1 | 19-11-2002 | NONE | | |
| WO 2014062109 | A1 | 24-04-2014 | CA | 2888335 A1 | 24-04-2014 |
| | | | EP | 2909826 A1 | 26-08-2015 |
| | | | US | 2015260614 A1 | 17-09-2015 |
| | | | WO | 2014062109 A1 | 24-04-2014 |
| EP 2863178 | A2 | 22-04-2015 | DE | 102013221050 A1 | 07-05-2015 |
| | | | EP | 2863178 A2 | 22-04-2015 |
| US 2012053805 | A1 | 01-03-2012 | NONE | | |
| US 2015094948 | A1 | 02-04-2015 | NONE | | |
| WO 2016125184 | A2 | 11-08-2016 | NONE | | |
| US 2010324781 | A1 | 23-12-2010 | NONE | | |

EPO FORM P0459

For more details about this annex : see Official Journal of the European Patent Office, No. 12/82

**REFERENCES CITED IN THE DESCRIPTION**

**Non-patent literature cited in the description**

- Distributed Computing in Sensor Systems and Workshops. International Conference on. IEEE, 2011, 1-6